# FASCICULE DE BREVET EUROPEEN

(11) **EP 2 151 277 B1**
(45) Date de publication et mention de la délivrance du brevet: **23.01.2019**
(21) Numéro de dépôt: 09290418.4
(22) Date de dépôt: 05.06.2009
(51) Int. Cl.: B01J 8/02, B01J 8/04, B01J 8/18, B01J 8/22, C10G 49/00

(54) **Réacteur gaz-liquide à écoulement co-courant ascendant avec plateau distributeur**
Gleichstrom aufsteigend Gas-Flüssigkeit Reaktor mit Verteilerplate
Up-flow co-current gas-liquid reactor with distribution plate

(30) Priorité: 15.07.2008 FR 0804057
(43) Date de publication de la demande: 10.02.2010
(73) Titulaire: IFP Energies nouvelles, 92500 Rueil-Malmaison (FR)
(72) Inventeur: Augier, Frédéric, 69360 Saint Symphorien d'Ozon (FR); Boyer, Christophe, 69390 Charly (FR)
(74) Mandataire: IFP Energies nouvelles

(56) Documents cités:
- WO-A-2004/018199
- WO-A-2009/004186
- FR-A- 2 553 300
- US-A- 3 197 286
- US-A- 3 414 386
- US-A- 3 441 498
- US-A- 4 526 757
- US-A- 5 958 220

## Description

La présente invention se rapporte à un réacteur comprenant un dispositif de distribution d'au moins une phase gazeuse et au moins une phase liquide circulant en un écoulement co-courant ascendant dans ce réacteur.

Elle concerne notamment un réacteur avec un tel dispositif qui est placé en amont d'une zone réactionnelle ou de contact gaz/liquide pouvant être composée d'un lit granulaire de particules solides, éventuellement catalytiques.

Elle se rapporte plus particulièrement à un réacteur de traitement ou d'hydrotraitement d'une charge fluide, comme pour le traitement catalytique de distillats issus des bruts de pétrole lourd.

Il est largement connu que, dans le type de réacteur avec un lit catalytique fixe, il est nécessaire de distribuer d'une façon la plus homogène possible non seulement la phase gazeuse mais aussi la phase liquide.

Il est aussi nécessaire d'assurer une répartition la plus égale et la plus uniforme possible de ces deux phases tout au long de la section frontale de ce réacteur pour optimiser le contact gaz-liquide dans le réacteur et pour faire fonctionner les différentes zones de ce réacteur de manière sensiblement identique.

Comme cela est déjà connu par le document US 3 441 498, cette répartition peut se réaliser par un plateau distributeur équipé de cheminées verticales et de perforations dont le but est d'obtenir une distribution sensiblement uniforme de la phase gazeuse et de la phase liquide sur toute la section d'un réacteur le plus souvent de forme cylindrique.

Ce type de plateau distributeur permet ainsi de distribuer la phase gazeuse par les perforations du plateau et la phase liquide par les cheminées.

Egalement dans le brevet US 6 123 323, il est décrit un dispositif de distribution utilisable en écoulement ascendant dans un réacteur alimenté par un mélange de liquide et de gaz.

Ce dispositif est composé d'un plateau distributeur occupant tout ou partie de la section totale du réacteur délimitant un volume dans lequel le gaz et le liquide vont se séparer. Le gaz s'écoule ensuite au travers d'orifices répartis sur toute la section du plateau. Le liquide s'écoule de façon séparée au travers de cheminées verticales traversant le plateau et se prolongeant en dessous de l'interface liquide/gaz ou au travers des fractions de la section du réacteur non couvertes par la plaque.

Ce réacteur, qui comprend une alimentation en gaz et en liquide par une conduite située en fond d'enceinte, est techniquement intéressant, mais présente néanmoins des inconvénients non négligeables.

En effet, le fonctionnement n'est pas optimisé, car le gaz se disperse mal sur la section transversale du réacteur et un panache de ce gaz monte généralement au centre de celle-ci. Ceci perturbe l'interface gaz-liquide sous le plateau distributeur et entraîne une mauvaise répartition du gaz sous le plateau.

De plus, du gaz peut éventuellement pénétrer à l'intérieur des cheminées de manière non souhaitée. Dans le cas de panache de gaz, il en suivra une mauvaise répartition du gaz sous le plateau avec une présence de ce gaz plus importante dans la zone centrale du plateau.

En outre, le désengagement du gaz va donc créer des perturbations importantes qui peuvent induire des pulsations de l'écoulement et déséquilibrer localement la distribution du gaz.

Egalement, les réacteurs décrits dans les documents FR 2 553 300, US 5 958 220, WO 2004/018 199, WO 2009/004 186, US 3197 286 et US 3 441 498 comportent un plateau de distribution d'un écoulement co-courant ascendant d'un mélange de gaz et de liquide.

La présente invention se propose de remédier aux inconvénients précités grâce à un réacteur à lit catalytique comprenant un plateau distributeur qui permet d'obtenir une distribution de la phase gazeuse régulièrement répartie tout au long de la section du réacteur et ne venant pas géner la distribution de la phase liquide, même en cas de perturbation de l'interface gaz-liquide.

A cet effet, la présente invention concerne un réacteur à écoulement co-courant ascendant d'un mélange d'une phase gazeuse et d'une phase liquide présent dans le fond du réacteur, ledit réacteur comprenant au moins un lit de garnissage, un plateau distributeur ayant au moins une cheminée principale permettant la circulation de la phase liquide en direction du lit, au moins un passage pour introduire la phase gazeuse dans ledit lit, caractérisé en ce que le plateau porte en outre au moins une cheminée mixte avec une hauteur plus petite que la hauteur de la cheminée principale et plus grande que la hauteur du passage pour permettre la circulation de la phase liquide en direction du lit ou pour l'introduction de la phase gazeuse dans ledit lit.

La cheminée mixte peut comprendre une section de traversée de fluide plus petite que la section de traversée de fluide de la cheminée principale.

La cheminée mixte peut être un tube ouvert à ses deux extrémités et sa section de traversée de fluide peut être la section diamétrale de ce tube.

La cheminée mixte peut être un tube ouvert à ses deux extrémités et sa section de traversée de fluide peut être une restriction de la section diamétrale de cette cheminée mixte.

La restriction peut être une rondelle évidée placée à l'une des extrémités de la cheminée mixte.

La cheminée mixte peut être un tube fermé à son extrémité inférieure et la section de traversée de cette cheminée peut être au moins un orifice portée par la paroi périphérique de cette cheminée.

La cheminée principale peut être logée coaxialement dans un trou porté par ledit plateau et de dimension diamétrale supérieure à celle de ladite cheminée.

Une cheminée mixte peut être placée entre la cheminée principale et le trou et coaxialement à ceux-ci.

Les autres caractéristiques et avantages de l'invention vont apparaître à la lecture de la description qui va suivre, donnée à titre uniquement illustratif et non limitatif, et à laquelle sont annexées :
- la figure 1 qui montre un schéma partiel, en coupe axial, d'un réacteur selon l'invention comportant un plateau de distribution ;
- la figure 2 est une vue fragmentaire, à grande échelle, d'une variante du réacteur selon l'invention ;
- la figure 3 une autre vue fragmentaire, à grande échelle, d'une autre variante du réacteur selon l'invention et
- la figure 4 une autre vue fragmentaire à grande échelle d'une troisième variante du réacteur selon l'invention..

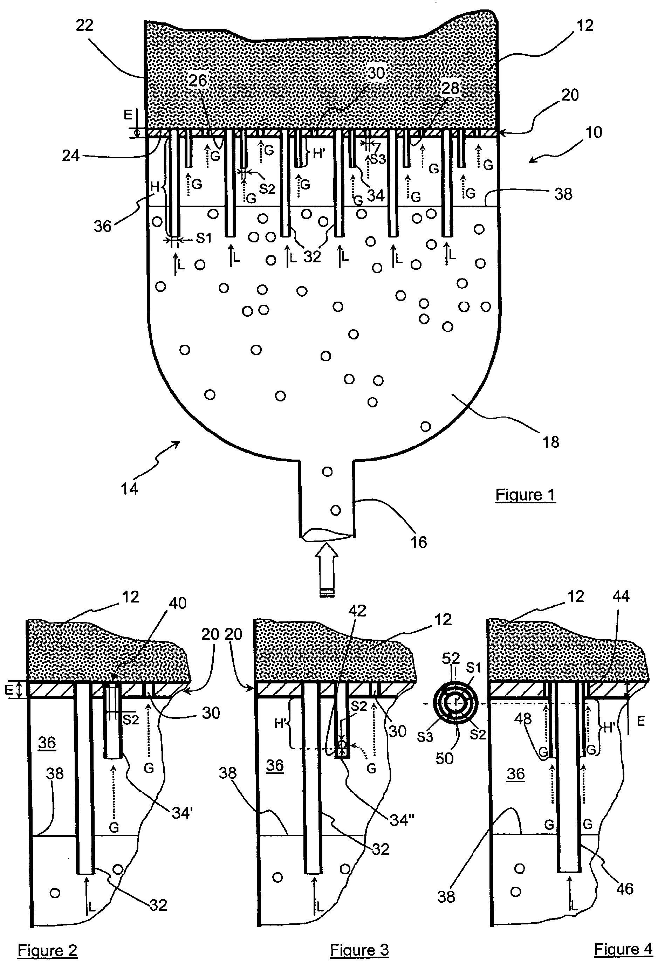

Sur la figure 1, le réacteur fermé 10, préférentiellement de forme tubulaire allongée verticale, comprend généralement à sa partie supérieure des moyens d'introduction de produits (non représentés) qui permettent de former au moins un lit granulaire 12.

Par lit granulaire, il est entendu un ensemble de particules solides ayant la forme de grain de dimensions de l'ordre de quelques millimètres et présentant avantageusement une activité catalytique permettant de former un lit catalytique qui est composé aussi bien de catalyseur frais que de catalyseur régénéré.

De même, il est entendu que le terme réacteur utilisé ci-dessus couvre aussi bien les enceintes que les colonnes.

Ce réacteur comporte dans la région de son fond 14, et de préférence dans la zone médiane de celui-ci, une conduite d'alimentation 16 d'un mélange d'alimentation 18 (ou charge) d'une phase gazeuse et d'une phase liquide.

Avantageusement, la phase gazeuse comprend un mélange contenant de l'hydrogène pur, ou un mélange contenant de l'hydrogène pur ainsi que de l'hydrogène résiduel, et des hydrocarbures vaporisés alors que la phase liquide comprend essentiellement des hydrocarbures.

Le mélange d'alimentation peut éventuellement comporter d'autres phases comme de l'eau avec de l'air ou de l'oxygène, un ou des hydrocarbure(s) avec de l'air ou de l'oxygène.

Le lit granulaire est délimité en partie basse de ce réacteur par un plateau perforé transversal 20, placé à distance du fond 14 du réacteur, qui s'étend jusqu'à la paroi périphérique 22 de celui-ci et dont le rôle sera explicité dans la suite de la description.

Comme cela est largement connu, un tel réacteur permet la distribution et le mélange d'un écoulement de gaz et de liquide dans ce réacteur opérant en écoulement ascendant. Pour obtenir la réaction catalytique souhaitée, il est donc nécessaire de réaliser un contact réactionnel gaz/liquide/solide. Pour cela, le catalyseur du lit granulaire est maintenu immobile dans le réacteur ou est mis en ébullition par l'écoulement gaz/liquide.

Comme mieux visible sur la figure 1, le plateau distributeur 20, ou plateau de distribution, délimite le lit granulaire 12 tout en étant placé en aval de la conduite d'alimentation 16 et du fond 14 du réacteur.

Ce plateau est constitué d'une plaque plane 24 occupant toute la section du réacteur jusqu'à sa paroi périphérique 22.

Cette plaque comprend une multiplicité de trous 26, 28, 30 le traversant Les trous 26 reçoivent, à étanchéité, des tubes creux verticaux 32 ouverts à leurs deux extrémités, désignés dans la suite de la description par le terme de "cheminée principale", et destinés à être parcourue par la phase essentiellement liquide L du mélange d'alimentation. Les trous 28 sont destinés à recevoir à étanchéité des tubes creux verticaux 34 également ouverts à leurs deux extrémités, désignés en tant que "cheminée mixte". Ces cheminées mixtes sont parcourues, soit par la phase essentiellement liquide L du mélange d'alimentation, soit par la phase essentiellement gazeuse G du mélange d'alimentation. Les trous 30 de la plaque sont en l'état en étant préférentiellement dépourvues de tubes creux et forment des passages traversés par la phase essentiellement gazeuse G du mélange.

Le plateau de distribution est donc composé d'une série de cheminées principales 32, de cheminées mixtes 34 et de passages 30.

Ce plateau permet ainsi la communication des fluides gazeux et liquide du fond du réacteur vers le lit granulaire.

La hauteur axiale H des cheminées principales 32 est plus grande que la hauteur axiale H' des cheminées mixtes 34 qui est elle-même plus grande que la hauteur des passages 30, ici confondue avec l'épaisseur E de la plaque 24. Les hauteurs H et H' sont considérées entre la face inférieure de la plaque 24 et l'extrémité inférieure ouverte dans laquelle est introduit le fluide, respectivement de la cheminée principale et de la cheminée mixte.

La section transversale de traversée S1 des cheminées principales 32, considérée radialement, est préférentiellement plus grande que la section transversale de traversée S2 des cheminées mixtes 34 et que la section transversale de traversée S3 des passages 30.. Avantageusement, les sections S2 et S3 sont égales entre elles mais elles peuvent être différentes tout en étant inférieures à la section S1.

Ici, les sections S1 à S3 correspondent aux sections ouvertes au travers desquelles circule le fluide (gaz ou liquide) vers le lit 12. Les sections S1 et S2 sont considérées au niveau des sections diamétrales internes des tubes formant les cheminées principales 32 et mixtes 34, et la section S3 correspond à la section diamétrale des passages 30.

Bien entendu les passages, les cheminées et les trous qui portent ces cheminées peuvent posséder des géométries de section pouvant être de forme quelconque, identiques ou différentes entre elles, telle que circulaire, elliptique ou toute autre forme.

De même, le nombre, la disposition et la taille des cheminées 32, 34 et des passages 30 sur la plaque 24 seront choisis selon toute technique connue par l'homme du métier en fonction de valeurs de fonctionnement minimale et maximale du débit gazeux souhaité.

Plus précisément, et quelle que soit la plage de fonctionnement en débit gazeux, cela doit permettre la formation d'un ciel gazeux 36 sous le plateau 20 et d'une interface liquide/gaz 38 située au-dessus des extrémités inférieures des cheminées principales 32.

De manière préférentielle et comme cela est représenté à titre d'exemple sur la figure 1, les cheminés principales 32 sont parcourues par la phase liquide L du mélange, et les cheminées mixtes par la phase gazeuse G de ce mélange ainsi que les passages 30. De ce fait, les extrémités inférieures des cheminées principales 32 plongent dans le mélange d'alimentation 18 contenu dans le fond 14 du réacteur et les extrémités supérieures de ces cheminées sont en communication avec le lit granulaire 12.

Similairement, les extrémités inférieures des cheminées mixtes 34 aboutissent dans le ciel gazeux 36 alors que leurs extrémités supérieures sont en communication avec le lit granulaire 12.

Les passages 30 permettent de mettre en communication le ciel gazeux 36 avec le lit granulaire 12.

Avantageusement et comme cela est déjà connu, il peut être possible de prévoir un espace entre le plateau 20 et une grille qui supporte le lit granulaire.

Ceci permet de limiter la perte de charge du plateau dans le cas où les phases liquides et/ou gaz circulent à fortes vitesses.

Les termes "supérieure(s)" et "inférieure(s)" utilisés dans la présente description sont à considérer à la lecture du schéma du réacteur comme illustré sur la figure 1.

Durant le fonctionnement de ce réacteur, le mélange d'alimentation est introduit dans le fond 14 du réacteur par la conduite 16. Au fur et à mesure de l'ascension de ce mélange vers le plateau distributeur 20, la phase gazeuse, qui y est contenue, est désengagée de ce mélange. Cette phase gazeuse désengagée arrive en dessous du plateau 20 pour former le ciel gazeux 36 avec un interface gaz/liquide 38 entre ce ciel gazeux et la phase liquide dégazé du mélange d'alimentation.

Bien entendu et comme cela a déjà été mentionné plus haut, le ciel gazeux 36 résulte de la perte de charge réalisée par les différentes cheminées et passages dont le nombre, les dimensions et les configurations seront déterminés de façon à ce que l'interface 38 soit située, au mieux, au-dessus des extrémités inférieures des cheminées principales 32 et au dessous des extrémités inférieures des cheminées mixtes et, au pire, au-dessus des extrémités inférieures des cheminées mixtes sans pour cela atteindre la face inférieure du plateau 20.

Ainsi, dans la configuration de la figure 1, la phase liquide dégazée L parcoure les cheminées principales 32 pour aboutir dans le lit 12 et la phase gazeuse désengagée G du ciel 36 circule à la fois au travers des cheminées mixtes 34 et des passages 30 pour aboutir également dans le lit 12.

Ces phases liquide et gazeuse, qui ont été avantageusement distribuées de manière homogène tout au long du plateau 20, traversent le lit en un mouvement ascendant pour y réaliser la réaction chimique souhaitée pour ensuite en ressortir par tous moyens connus par l'homme du métier.

Bien entendu, dans la configuration du réacteur où l'interface 38 est située au-dessus des extrémités inférieures des cheminées mixtes 34, la phase gazeuse du ciel 36 ne traverse que les passages 30 alors que la phase liquide dégazée parcoure à la fois les cheminées principales 32 et les cheminées mixtes 34 pour aboutir dans le lit 12.

Ce plateau autorise ainsi une plus grande souplesse d'utilisation en terme de débits en gaz et en liquide, du fait de la présence des deux types de cheminées.

De plus, ce plateau permet de respecter les contraintes de compacité du réacteur en mettant en oeuvre des cheminées de faibles hauteurs.

En outre, ce réacteur rend possible l'utilisation d'un grand nombre de voies de circulation de gaz, notamment lorsque le débit de gaz augmente, tout en évitant une coalescence de gaz

La variante de la figure 2 se distingue de la figure 1 par le fait que les cheminées mixtes 34' comportent une section diamétrale identique à celle des cheminées principales et porte une section transversale de traversée S2 plus petite que la section transversale de passage S1 des cheminées principales 32.

Cette section de passage plus petite est réalisée par une restriction 40 portée par les cheminées mixtes 34'. Avantageusement, cette restriction de section est formée par une rondelle, de préférence évidée centralement, dont le diamètre extérieur est confondu avec le diamètre intérieur du tube formant la cheminée et dont le diamètre intérieur permet de définir la section de traversée S2.

Préférentiellement, cette restriction est située à l'une ou à l'autre des extrémités des cheminées mixtes mais peut également être placée dans un endroit quelconque entre les deux extrémités de ces cheminées.

Sur la variante de la figure 3, les extrémités inférieures des cheminées mixtes 34" en direction du fond du réacteur sont fermées alors que les extrémités supérieures restent en communication avec le lit granulaire 12. Pour assurer la communication du ciel gazeux 36 avec le lit 12, la paroi périphérique des cheminées mixtes porte au moins un orifice 42. Cet orifice, qui est ici circulaire, comporte une section de traversée S2 dont l'étendue correspond à celle des figures 1 ou 2.

C'est donc au travers de cet orifice, dont le point le plus bas détermine avec la face inférieure de la plaque 24 la hauteur H' de cette cheminée, qu'est introduite la phase gazeuse du ciel 36 pour ensuite parcourir les cheminées mixtes 34 et aboutir dans le lit 12.

Bien entendu, il peut être prévu une multiplicité d'orifices 42 disposés aussi bien circonférentiellement les uns à cotés des autres qu'axialement les uns au-dessus des autres ou une combinaison deux dispositions d'orifices.

De même, l'orifice peut être d'une forme différente de la forme circulaire, comme des fentes.

Dans la variante de la figure 4, la plaque 24 porte des trous 44, de préférence circulaire, logeant, de manière coaxiale, à la fois les cheminées principales ainsi que les cheminées mixtes et formant les passages précédemment mentionnés,

Comme visible sur cette figure, les cheminées principales 46 et les cheminées mixtes 48 sont logées coaxialement l'une dans l'autre tout en étant placées coaxialement aux trous 44. Pour cela, ces trous 44 présentent une dimension radiale plus grande que la dimension radiale des cheminées mixtes 48, qui elles-mêmes présentent une dimension radiale plus grande que la dimension radiale des cheminées principales 46.

De même, la hauteur H des cheminées principales est plus grande que la hauteur H' des cheminées mixtes qui est elle-même plus grande que la hauteur des trous 44, ici confondue avec l'épaisseur E de la plaque 24.

De manière avantageuse, les extrémités supérieures des cheminées principales et mixtes sont logées dans le trou 44 avec leurs extrémités supérieures placées dans le même plan horizontal, comme cela est mieux visible sur la figure 4.

Bien entendu, l'homme du métier envisagera tous les moyens permettant de réaliser l'assemblage entre les différentes cheminées et le trou, comme par exemple des entretoises radiales 50 soudées entre la périphérie externe de la cheminées principale et la périphérie interne de la cheminée mixte ainsi que des entretoises 52 soudées entre la périphérie externe de la cheminée mixte et la périphérie interne du trou 44.

Dans cette configuration, la section de traversée S1 correspond à la section diamétrale de la cheminée principale, la section S2 correspond à l'étendue surfacique transversale entre la périphérie externe de la cheminée principale et la périphérie interne de la cheminée mixte et la section S3 à l'étendue surfacique transversale entre la périphérie externe la cheminée mixte et la périphérie du trou 44.

Comme précédemment mentionné en relation avec les figures 1 à 3, la section S1 est plus grande que la section S2 qui est elle-même plus grande ou égale à la section S3.

Ainsi, les extrémités inférieures des cheminées principales 46 plongent dans la phase liquide dégazée et les extrémités supérieures débouchent dans le lit granulaire 12 en permettant ainsi la traversée de la phase liquide vers ce lit granulaire. L'espace de section S2 entre les cheminées principales et les cheminées mixtes ainsi que l'espace de section S3 entre les cheminées mixtes et les trous 44 permettent la circulation et la traversée de la phase gazeuse du ciel gazeux 36 vers le lit 12.

La présente invention n'est pas limitée aux exemples de réalisation décrits.

Notamment, en substitution du mélange d'alimentation comme décrit ci-dessus, il peut être envisagé d'introduire la phase liquide L en fond de réacteur par un premier moyen d'alimentation et d'injecter la phase gazeuse G en dessous du plateau distributeur par un autre moyen d'alimentation de façon à créer un ciel gazeux et une interface liquide/gaz.

## Revendications

1. Réacteur à écoulement co-courant ascendant d'un mélange d'une phase gazeuse et d'une phase liquide présent dans le fond (14) du réacteur, ledit réacteur comprenant:
• au moins un lit de garnissage (12),
• un plateau distributeur (20) ayant au moins une cheminée principale (32) permettant la circulation de la phase liquide (L) en direction du lit, au moins un passage (30) pour introduire la phase gazeuse (G) dans ledit lit,
**caractérisé en ce que** le plateau (20) porte en outre au moins une cheminée mixte (34) avec une hauteur (H') plus petite que la hauteur (H) de la cheminée principale (32) et plus grande que la hauteur (E) du passage (30) pour permettre la circulation de la phase liquide en direction du lit ou pour l'introduction de la phase gazeuse dans ledit lit.

2. Réacteur selon la revendication 1, **caractérisé en ce que** la cheminée mixte (34) comprend une section de traversée de fluide (S2) plus petite que la section de traversée de fluide (S1) de la cheminée principale (32).

3. Réacteur selon la revendication 1 ou 2, **caractérisé en ce que** la cheminée mixte (34) est un tube ouvert à ses deux extrémités et **en ce que** la section de traversée de fluide (S2) de la cheminée mixte est la section diamétrale de ce tube.

4. Réacteur selon la revendication 1 ou 2, **caractérisé en ce que** la cheminée mixte (34) est un tube ouvert à ses deux extrémités et **en ce que** la section de traversée de fluide (S2) est une restriction (40) de la section diamétrale de la cheminée mixte.

5. Réacteur selon la revendication 4, **caractérisé en ce que** la restriction une rondelle évidée (40) placée à l'une des extrémités de la cheminée mixte (34).

6. Réacteur selon la revendication 1 ou 2, **caractérisé en ce que** la cheminée mixte est un tube fermé à son extrémité inférieure et **en ce que** la section de traversée (S2) de la cheminée mixte est au moins un orifice (42) portée par la paroi périphérique de cette cheminée.

7. Réacteur selon la revendication 1, **caractérisé en ce que** la cheminée principale (46) est logée coaxialement dans un trou (44) porté par ledit plateau et de dimension diamétrale supérieure à celle de ladite cheminée.

8. Réacteur selon la revendication 7, **caractérisé en ce qu'**une cheminée mixte (48) est placée entre la cheminée principale (46) et le trou (44) et coaxialement à ceux-ci.

## Patentansprüche

1. Reaktor mit aufsteigender Gleichstromströmung eines Gemisches einer gasförmigen Phase und einer flüssigen Phase, das im Boden (14) des Reaktors vorhanden ist, wobei der Reaktor umfasst:
- mindestens ein Packungsbett (12),
- eine Verteilungsplatte (20), die mindestens einen Hauptkamin (32) hat, der die Zirkulation der flüssigen Phase (L) in Richtung des Betts ermöglicht, mindestens einen Durchgang (30), um die gasförmige Phase (G) in das Bett einzuleiten,
**dadurch gekennzeichnet, dass** die Platte (20) ferner mindestens einen Mischkamin (34) mit einer geringeren Höhe (H') als die Höhe (H) des Hauptkamins (32) und größer als die Höhe (E) des Durchgangs (30) trägt, um die Zirkulation der flüssigen Phase in Richtung des Betts zu ermöglichen, oder um die gasförmige Phase in das Bett einzuleiten.

2. Reaktor nach Anspruch 1, **dadurch gekennzeichnet, dass** der Mischkamin (34) einen Fluiddurchgangsquerschnitt (S2) umfasst, der kleiner als der Fluiddurchgangsquerschnitt (S1) des Hauptkamins (32) ist.

3. Reaktor nach Anspruch 1 oder 2, **dadurch gekennzeichnet, dass** der Mischkamin (34) ein an seinen zwei Enden offenes Rohr ist, und dass der Fluiddurchgangsquerschnitt (S2) des Mischkamins der diametrale Querschnitt dieses Rohrs ist.

4. Reaktor nach Anspruch 1 oder 2, **dadurch gekennzeichnet, dass** der Mischkamin (34) ein an seinen zwei Enden offenes Rohr ist, und dass der Fluiddurchgangsquerschnitt (S2) eine Einschränkung (40) des diametralen Querschnitts des Mischkamins ist.

5. Reaktor nach Anspruch 4, **dadurch gekennzeichnet, dass** die Einschränkung eine ausgenommene Scheibe (40) ist, die an einem der Enden des Mischkamins (34) angeordnet ist.

6. Reaktor nach Anspruch 1 oder 2, **dadurch gekennzeichnet, dass** der Mischkamin ein an seinem unteren Ende geschlossenes Rohr ist, und dass der Durchgangsquerschnitt (S2) des Mischkamins mindestens eine Öffnung (42) ist, die von der Umfangswand dieses Kamins getragen wird.

7. Reaktor nach Anspruch 1, **dadurch gekennzeichnet, dass** der Hauptkamin (46) koaxial in einem Loch (44) angeordnet ist, das von der Platte getragen wird und eine größere diametrale Dimension als jene des Kamins aufweist.

8. Reaktor nach Anspruch 7, **dadurch gekennzeichnet, dass** ein Mischkamin (48) zwischen dem Hauptkamin (46) und dem Loch (44) und koaxial zu diesen angeordnet ist.

## Claims

1. Reactor with an ascending co-current flow of a mixture of a gas phase and a liquid phase contained in bottom (14) of the reactor, said reactor comprising
- at least one packed bed (12),
- a distribution plate (20) with at least one main chimney (32) allowing circulation of said liquid phase (L) towards the bed and at least one passage (30) for feeding said gas phase (G) into said bed,
**characterized in that** plate (20) also comprises at least one mixed chimney (34) with a smaller height (H') than the height (H) of main chimney (32) and greater than the height (E) of passage (30) for circulation of the liquid phase towards the bed or for feeding the gas phase into said bed.

2. Reactor as claimed in claim 1, **characterized in that** mixed chimney (34) comprises a cross-sectional area of fluid flow (S2) that is smaller than the cross-sectional flow area (S1) of main chimney (32).

3. Reactor as claimed in claims 1 or 2, **characterized in that** mixed chimney (34) is a tube open at both ends and its cross-sectional area of fluid flow (S2) is the diametral section of this tube.

4. Reactor as claimed in claims 1 or 2, **characterized in that** mixed chimney (34) is a tube open at both ends and its cross-sectional area of fluid flow (S2) is a restriction (40) of the diametral section of this mixed chimney.

5. Reactor as claimed in claim 4, **characterized in that** the restriction is a hollow washer (40) arranged at one end of mixed chimney (34).

6. Reactor as claimed in claims 1 or 2, **characterized in that** the mixed chimney is a tube closed at the lower end thereof and the cross-sectional flow area (S2) of the mixed chimney is at least one orifice (42) provided in the peripheral wall of this chimney.

7. Reactor as claimed in claim 1, **characterized in that** main chimney (46) is housed coaxially in a hole (44) provided in said plate and of greater diametral dimension than said chimney.

8. Reactor as claimed in claim 7, **characterized in that** a mixed chimney (48) is arranged between main chimney (46) and hole (44), and coaxially thereto.
